# EUROPÄISCHE PATENTANMELDUNG

(11) **EP 2 154 639 A1**
(43) Veröffentlichungstag der Anmeldung: **17.02.2010**
(21) Anmeldenummer: 08014438.9
(22) Anmeldetag: 13.08.2008
(51) Int. Cl.: G06Q 10/00, G06Q 30/00

(54) **Publikations-Abonnementsystem und Verfahren dazu**

(71) Anmelder: EADS Deutschland GmbH, 85521 Ottobrunn (DE)
(72) Erfinder: Oswald, Norbert Dr., 85598 Baldham (DE); Förster, Stefan Dr., 81739 München (DE); Reichelt, Toni, 81739 München (DE); Moser, Herwig, 81739 München (DE)

(57) **Zusammenfassung**

Die Erfindung betrifft ein Publikations-Abonnementsystem umfassend einen oder mehrere Herausgeber (6) zur Erzeugung von Nachrichten, einen oder mehrere Abonnenten (5) zur Registrierung eines oder mehrerer Abonnements und zum Empfangen von Nachrichten aufgrund dieser Abonnements, eine oder mehrere Einrichtungen zur Erzeugung von Datenanfragen, eine Verwaltungseinrichtung (4) zur Verwaltung der Anfrage des Abonnenten, eine Überprüfungseinrichtung (2) zur Überprüfung der Nachricht des Herausgebers (6) bzw. der Anfrage des Abonnenten (5) auf Gültigkeit, wobei die Nachricht bzw. die Anfrage bezüglich Syntax überprüft wird und mögliche Relationen zwischen den Daten in der Nachricht bzw. der Anfrage unter Berücksichtigung vorgegebener Datenmodelle bestimmt werden,
eine oder mehrere dynamisch oder statisch instanziierbare Wissensbasen (3), jeweils umfassend eine Datenbank (8) zur Speicherung der Nachrichten und eine Einrichtung (9) zur Schlussfolgerung über die Inhalte der Datenbank (8) unter Berücksichtigung eines der jeweiligen Wissensbasis (3) zugeordneten Datenmodells (10).

## Beschreibung

Die Erfindung betrifft ein Publikations-Abonnementsystem gemäß den Merkmalen des Anspruchs 1.

Im Folgenden werden zum besseren Verständnis der Erfindung einige in der nachfolgenden Beschreibung verwendeten Begriffe erläutert:
- Datenmodell: Eine formale Datenbeschreibung. Diese umfasst die Festlegung der Struktur der Daten (Datentypen), von Konsistenz-/Integritätsbedingungen sowie von möglichen Relationen zwischen Daten. Mögliche Ausprägungsformen von Datenmodellen sind:
   ○ eine lexikographische Menge,
   ○ ein hierarchisches Typsystem,
   ○ eine Ontologie.
- Instanz/Individuum: Eine Ausprägung des Datenmodells. Eine Instanz ist eindeutig identifizierbar.
- Konzept: Die Zusammenfassung von Instanzen, die sich durch gemeinsame Merkmale auszeichnen. Konzepte stellen Ausschnitte des Datenmodells dar, oftmals vergleichbar mit Datentypen.
- Publikation: Eine Publikation besteht aus Aussagen über Merkmalsausprägungen von Instanzen. Sie umfasst das Setzen, Modifizieren und Löschen von Merkmalen.
- Herausgeber: Eine Datenquelle, welche Publikationen bereitstellt.
- Abonnement: Auftrag zur Benachrichtigung bei Verfügbarkeit von Aussagen über Instanzen (durch Publikationen), welche einem konkreten Konzept zuordenbar sind.
- Abonnent: Eine Datensenke, die Daten gemäß ihres Abonnements konsumiert.
- Mediator: Ein Vermittler, welcher:
   o Abonnements verwaltet und
   o Publikationen gemäß den im Datenmodell definierten Relationen zu Abonnements zuordnet (engl. match) und in Folge, die Aussagen der Publikationen den entsprechenden Abonnenten zustellt (engl. notification).

Kernaufgabe eines jeden Publish/Subscribe (P/S) Systems ist die Zuordnung von Publikationen zu Abonnements gemäß den Interessen der Abonnenten. Jedes Abonnement ist dabei mindestens einem Abonnenten direkt zuzuordnen. In einem klassischen P/S System erfolgt die Zuordnung, sowohl von Publikationen zu Abonnements, als auch von Abonnements zu Abonnenten durch einen Mediator. Diese Zuordnungen erfolgen auf der Basis eines Datenmodells. Je nach Ausdrucksfähigkeit des Datenmodells wird eine entsprechende Mächtigkeit des Mediators benötigt. Im Fall von z.B. typ-basierten Systemen bedeutet Mächtigkeit, dass der Mediator die Fähigkeit besitzt, Typen direkt vergleichen oder eine Generalisierungsrelation gemäß dem gegeben Datenmodell feststellen zu können. Während dem Mediator das vollständige Datenmodell bekannt sein muss, ist es für Herausgeber und Abonnenten in der Regel ausreichend, nur Teile des Datenmodells zu kennen.

Für die Zuordnung von Publikationen zu Abonnements gibt es im wesentlichen drei Arten von Mediatoren, solche die einen Abgleich typ-basiert, themen-basiert oder inhalts-basiert durchführen. Bei themen-basierten Mediatoren erfolgt die Zuordnung durch den Vergleich von Schlagworten/Themen. Einzelne existierende Ansätze dieser Kategorie erlauben auch Generalisierungen/Spezialisierungen durch Hierarchien von Schlagworten/Themen. Bei typ-basierten Mediatoren reflektiert die Zuordnung ein konkretes Typsystem. Die Ausdrucksfähigkeit, z.B. Typenvererbung oderaggregation, ist meist an das Typensystem einer Programmiersprache angelehnt. Weiterhin existieren Systeme, welche Ontologien zur Beschreibung eines hierarchischen Schemas verwenden. Inhaltsbasierte Mediatoren erlauben das Filtern nach speziellen Inhalten einer Publikation, nachdem eine prinzipielle Zuordnung zum Abonnement bereits erfolgt ist.

Die Mächtigkeit der zuvor genannten Systeme beschränkt sich auf eine Generalisierungsrelation (Hierarchie). Dies bedeutet, dass zwei verschiedene Konzepte, A und B, eines Datenmodells entweder in keiner (hierarchischen) Beziehung zueinander stehen oder, o.B.d.A., wenn A eine Generalisierung von B modelliert, dann ist jede Instanz von B stets auch eine instanz von A. Der Erfindung liegt das technische Problem zugrunde, ein erweitertes P/S-System zur Verfügung zu stellen, das eine feingranulare Modellierung der Beziehungen zwischen Konzepten erlaubt. Das erweiterte P/S-System erlaubt die Zuordnung einer Instanz des Konzepts B o.B.d.A. zu Konzept A auf Basis individueller Merkmalsausprägungen der konkreten Instanz des Konzepts B. Das heisst insbesondere, dass im Gegensatz zur Generalisierungsrelation einer Hierarchie, nicht automatisch jede Instanz des Konzepts B eine Relation zum Konzept A impliziert.

Die Modellierung der bedingten Konzeptzuordnung wird im Folgenden als Konzeptentkopplung bezeichnet.

Dieses Problem wird mit dem Publikations-Abonnementsystem gemäß den Merkmalen des Anspruchs 1 gelöst. Vorteilhafte Ausführungen der Erfindungen sowie Verfahren zum Registrieren eines Abonnements, zum Registrieren und Versenden einer Publikation und zum Realisierung einer Datenanfrage sind Grundlage von Unteransprüchen.

Das erfindungsgemäße Publikations-Abonnementsystem umfasst
- einen oder mehrere Herausgeber zur Erzeugung von Nachrichten,
- einen oder mehrere Abonnenten zur Registrierung eines oder mehrerer Abonnements und zum Empfangen von Nachrichten aufgrund dieser Abonnements,
- eine oder mehrere Einrichtungen zur Erzeugung von Datenanfragen,
- eine Verwaltungseinrichtung zur Verwaltung der Anfrage eines Abonnenten,
- eine Überprüfungseinrichtung zur Überprüfung der Nachricht eines Herausgebers bzw. der Anfrage eines Abonnenten auf Gültigkeit, wobei die Nachricht bzw. die Anfrage bezüglich Syntax überprüft wird und mögliche Relationen zwischen den Daten in der Nachricht bzw. der Anfrage unter Berücksichtigung vorgegebener Datenmodelle bestimmt werden,
- eine oder mehrere dynamisch oder statisch instanziierbare Wissensbasen, jeweils umfassend eine Datenbank zur Speicherung der Nachrichten und eine Einrichtung zur Schlussfolgerung über die Inhalte der Datenbank unter Berücksichtigung eines der jeweiligen Wissensbasis zugeordneten Datenmodells.

Das erfindungsgemäße Publikations-Abonnementsystem ordnet dabei Publikationen Abonnements zu, durch Tests auf die Erfüllbarkeit logischer Aussagen. Grundlage für diese Tests ist ein formales Datenmodell bzw. Schema, bestehend aus einer Menge von Konzepten. Konzepte beschreiben mögliche Eigenschaften bzw. Ausprägungen von Instanzen mit Hilfe von maschinell verarbeitbaren deduktiven Regeln. Dabei erfolgt die Beschreibung der Regeln durch Description-Logic Ontologien (DL-Ontologien) oder anderen geeigneten Formalismen. Die Zuordnung zwischen Publikationen und Abonnements erfolgt basierend auf den in der Ontologie beschriebenen Beziehungen der Konzepte. Dabei werden die expliziten und impliziten Beziehungen zwischen Konzepten, wie sie durch DL-Ontologien unterstützt werden, unter zu Hilfenahme einer Schlussfolgerungslogik berücksichtigt.

Ein P/S System, welches das in dieser Erfindung beschriebene Verfahren integriert, verwendet Ontologien oder ähnliche Prinzipien zur Beschreibung von Datenpublikationen und Datenabonnements.

Das erfindungsgemäße Publikations-Abonnementsystem bietet folgende Vorteile gegenüber existierenden P/S Systemen:
- Die Schlussfolgerungslogik liegt an einer zentralen Stelle im System vor. Dadurch werden Inkonsistenzen in der Datenbasis des P/S Systems vermieden.
- Bei persistenter Datenhaltung in der Wissensbasis ist eine Schlussfolgerung über die Summe der Aussagen verschiedener, unabhängiger Herausgeber möglich.
- Die Schlussfolgerung erfolgt nur dann, wenn mindestens ein entsprechendes Abonnement vorliegt bzw. eine entsprechende Anfrage erfolgt.
- Herausgeber und Abonnenten können unabhängig voneinander auf für sie spezialisierten Datenkonzepten des Schemas arbeiten und müssen keine potentiell orthogonalen Konzepte berücksichtigen.
- Eine Erweiterung des Datenmodells/ Schemas impliziert keine Änderungen an der Funktionslogik der Herausgeber und Abonnenten.

Die Erfindung sowie weitere vorteilhafte Ausführungen werden im Folgenden anhand von Abbildungen näher erläutert. Es zeigen:
- Abb. 1: den technischen Aufbau eines erfindungsgemäßen Publikations- Abonnementsystems,
- Abb. 2: ein Aktivitätsdiagram zur Veranschaulichung des Ablaufes von Datenabon- nements,
- Abb. 2a: ein Kommunikationsdiagram zur Veranschaulichung des Verfahrensablaufes eines Datenabonnements,
- Abb. 3: ein Aktivitätsdiagram zur Veranschaulichung der Bearbeitung von Daten- abonnements in der Verwaltungseinrichtung,
- Abb. 4: ein Aktivitätsdiagram zur Veranschaulichung der Erzeugung von Benachrich- tigungen in der Verwaltungseinrichtung,
- Abb. 5: ein Aktivitätsdiagram zur Veranschaulichung des Ablaufes von Datenpublika- tionen,
- Abb. 5a: ein Kommunikationsdiagram zur Veranschaulichung des Verfahrensablaufes bei Datenpublikationen,
- Abb. 6: ein Aktivitätsdiagram zur Veranschaulichung der Bearbeitung einer Daten- publikation in einer Wissensbasis,
- Abb. 7: ein Aktivitätsdiagram zur Veranschaulichung des Ablaufes von Datenabfra- gen,
- Abb. 8: ein Aktivitätsdiagram zur Veranschaulichung der Bearbeitung einer Datenab- frage in einer Wissensbasis,
- Abb. 9: einen Ausschnitt aus einem beispielhaften Datenschema,
- Abb. 10: eine beispielhafte Ableitungsregel für das beispielhafte Datenschema aus Abb. 9,
- Abb. 11: einen beispielhaften Aufbau eines Informationsmanagementsystems mit einem Herausgeber, einem Abonnenten und einer hybriden Komponente, die sowohl abonniert als auch publiziert.

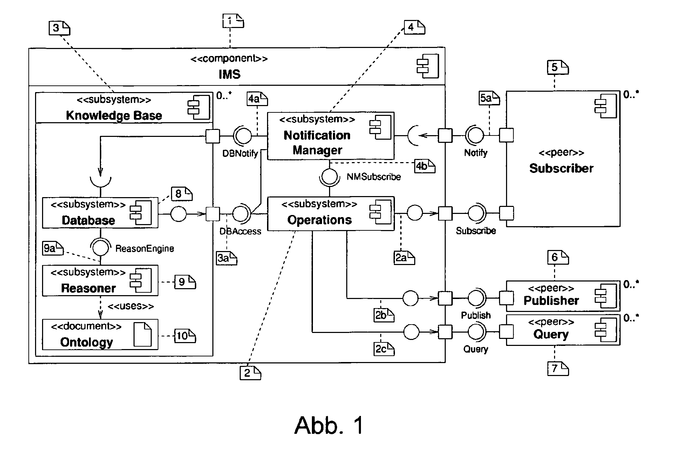

Abb. 1 zeigt den technischen Aufbau eines erfindungsgemäßen Publikations-Abonnementsystems. Das erfindungsgemäße Publikations-Abonnementsystem PS besteht im Wesentlichen aus einem oder mehreren Abonnenten (5), einem oder mehreren Herausgebern (6), einer oder mehreren Einrichtungen zur Datenabfrage (7), sowie einem Informationsmanagementsystem IMS. Dieses Informationsmanagementsystem IMS umfasst eine Überprüfungseinrichtung (2), eine Verwaltungseinrichtung (4) sowie dynamisch oder statisch instanziierbaren Wissensbasen (3).

Die Überprüfungseinrichtung (2) weist folgende Schnittstellen auf: eine Schnittstelle 2a zur Registrierung von Abonnements von einem oder mehreren Abonnenten (5), eine Schnittstelle (2b) zum Empfang von Publikationen von einem oder mehreren Herausgebern (6) sowie eine Schnittstelle (2c) zum Empfang von Datenanfragen von einer oder mehreren Einrichtungen (7) zur Erzeugung von Datenanfragen. Darüber hinaus ist durch die Schnittstelle (3a) der Wissensbasis/ Wissensbasen (3) ein Zugriff auf die Datenbank/ die Datenbanken (8) der Wissensbasis/ Wissenbasen (3) möglich. Ferner nutzt die Überprüfungseinrichtung (2) die Schnittstelle (4b) der Verwaltungseinrichtung (4) zur Übergabe gültiger Abonnements.

Die Wissensbasen (3) werden statisch zur Systemdesignzeit und/ oder dynamisch zur Systemlaufzeit durch die Überprüfungseinrichtung (2) erzeugt. Es ist auch möglich dies zu mischen, d.h. eine Menge von statisch vorgegebenen Wissensbasen (3) werden dynamisch zur Systemlaufzeit um weitere erweitert. Jede Wissensbasis (3) enthält unabhängig von den anderen Wissensbasen (3), eine Datenbank (8), eine Einrichtung zur Schlussfolgerung (9) und ein Datenmodell (10). Dieses Design erlaubt eine verteilte Implementierung des Informationsmanagementsystem IMS, z.B. zur Lastverteilung in größeren, Publish/Subscribe basierten, Applikationen. Jede Wissensbasis (3) stellt über die Schnittstelle (3a) Funktionen zur Abfrage/Veränderung/Verwaltung der jeweiligen Wissensbasis (3) zur Verfügung. Weiterhin nutzt jede Wissensbasis (3) die Schnittstelle (4a) zur Benachrichtigung der Verwaltungseinrichtung (4) bei Änderungen in der jeweiligen Datenbank (8). Die Datenbank (8) speichert alle jemals zu einem zugeordneten Datenmodell (10), z.B. Ontologie, über die Schnittstelle (3a) gesendeten Publikationen. Bei jeder Änderung des Datenbestandes der Datenbank (8) über die Schnittstelle (3a) wird eine Benachrichtigung über die Schnittstelle (4a) versandt. Die Einrichtung zur Schlussfolgerung (9) stellt über die Schnittstelle (9a) eine Schlussfolgerungslogik zur Verfügung. Die Einrichtung Datenmodell (10) beinhaltet z.B. eine DL-Ontologie.

Die Verwaltungseinrichtung (4) verwaltet alle Abonnements. Dazu stellt sie die Schnittstelle (4b) zur Verfügung, durch die sie die Abonnements nach Überprüfung von Überprüfungseinrichtung (2) erhält. Weiterhin stellt die Verwaltungseinrichtung (4) die Schnittstelle (4a) zur Verfügung, über die die jeweiligen Wissenbasen (3) über Datenänderungen ihrer Datenbanken (8) die Verwaltungseinrichtung (4) benachrichtigen. Um zu überprüfen, welche Abonnements durch eine Änderung des Datenbestandes erfüllt sind, verwendet die Verwaltungseinrichtung (4) die Schnittstelle (3a).

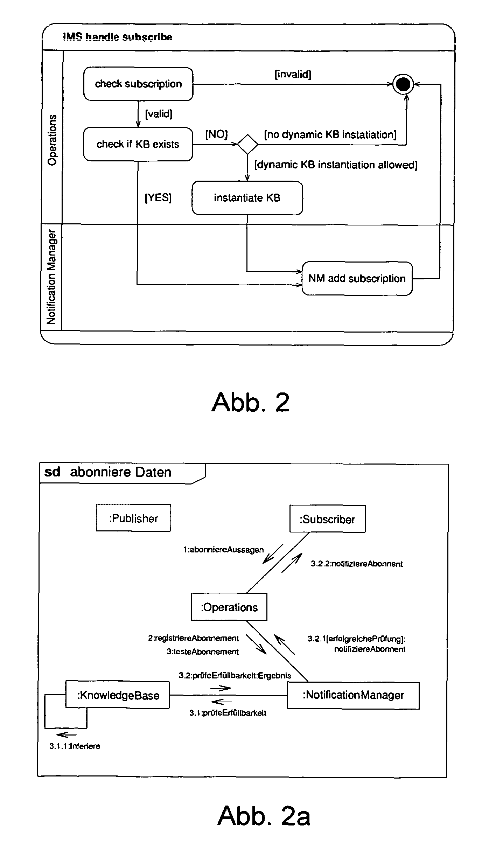

In den Abbildungen 2 und 2a ist der Ablauf eines Datenabonnements veranschaulicht. Ein über die Schnittstelle (2a) erhaltenes Abonnement wird innerhalb Überprüfungseinrichtung (2) zuerst auf seine Gültigkeit überprüft ("check subscription"). Dies beinhaltet unter anderem die Überprüfung der Syntax des Abonnements und der Kenntnis des referenzierten Datenmodells oder Datenmodelle, z.B. Ontologie(n). Ist das Abonnement ungültig ("[invalid]") wird es verworfen und die weitere Bearbeitung abgebrochen. Im Falle eines formal gültigen Abonnements ("[valid]") wird als nächstes geprüft, ob für das referenzierte Datenmodell eine entsprechende Wissensbasis 3 mit einer entsprechenden Instanz existiert. Sollte für das ermittelte Datenmodell noch keine Wissensbasis 3 mit einer entsprechenden Instanz existieren ("[NO]") und sollte in einer Variante der Erfindung keine dynamische Instantiierung einer Wissensbasis 3 erlaubt bzw. möglich sein ("[no dynamic KB instantiation]") so wird das Abonnement ebenfalls verworfen. Falls die Erzeugung der Wissensbasis 3 möglich bzw. erlaubt ist, wird diese erzeugt ("instantiate KB"). Für den Fall, dass die Wissensbasis 3 erzeugt werden konnte bzw. bereits existierte ("[YES]"), wird das Abonnement zur weiteren Bearbeitung über die Schnittstelle 4b an die Verwaltungseinrichtung 4 und dort bearbeitet ("NM add subscription").

Entsprechend dem Kommunikationsdiagramm in Abb. 2a werden folgende Schritte durchgeführt:
1. Ein ":Subscriber" (Abonnent) schickt ein Abonnement, an ":Interface" ("1:abonniereAussagen").
2. Nach einer syntaktischen Überprüfung wird das Abonnement an den :SubscriptionManager weitergeleitet ("2:registriereAbonnement").
3. Anschließend wird eine Überprüfung angestoßen, ob für das Abonnement bereits Publikationen vorliegen ("3:testeAbonnement").
3.1. Der :SubscriptionManager stößt daraufhin eine Prüfung auf Erfüllbarkeit des Abonnements in der Komponente :KnowledgeBase (Wissensbasis) an ("3.1:prüfeErfüllbarkeit").
3.1.1. Innerhalb der :KnowledgeBase wird (wenn nicht bereits geschehen) über die vorhanden Instanzen und das Datenmodell geschlussfolgert ("3.1.1:inferiere").
3.2. Die Schlussfolgerungen werden an den :SubscriptionManager zurückgeliefert ("3.2:prüfeErfüllbarkeit:Ergebnis").
3.2.1. Sollte das Abonnement erfüllt sein, wird das Ergebnis an das :Interface zurückgeliefert ("3.2.1 [erfolgreichePrüfung]notifiziereAbonnent").
3.2.2. Das :Interface leitet das Ergebnis weiter an den :Subscriber ("3.2.2:notifiziereAbonnent").

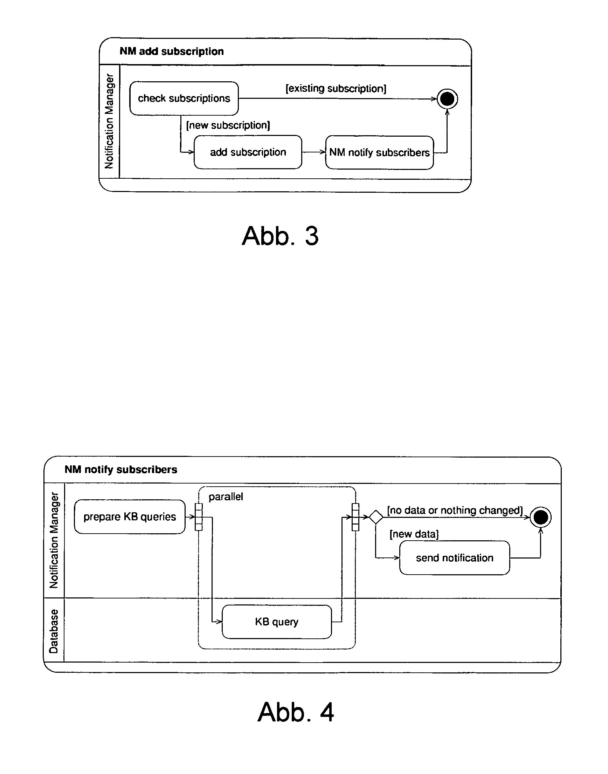

Die Bearbeitung eines Datenabonnements in der Verwaltungseinrichtung 4 ist in Abb. 3 dargestellt. Zuerst wird geprüft, ob das übergebene Abonnement bereits in der Verwaltungseinrichtung 4 gespeichert ist (Duplikatsprüfung). Ist dies der Fall wird die weitere Bearbeitung abgebrochen ("[existing subscription]"). Handelt es sich bei dem übergebenen Abonnement um ein neues, noch nicht bekanntes, Abonnement ("[new subscription]") so wird dieses in der Verwaltungseinrichtung 4 abgespeichert ("add subscription"). Als nächstes wird geprüft, ob eine Benachrichtigung von Datenabonnenten notwendig ist ("NM notify subscriber"). Dieses Vorgehen stellt sicher, dass nach einem initialen Abonnement alle bereits vorhandenen (d.h. bis dahin gespeicherten) Informationen aus der Datenbank an interessierte Datenabonnenten verteilt werden.

Die Benachrichtigung von Datenabonnenten durch die Verwaltungseinrichtung 4 wird in Abb. 4 gezeigt. Zuerst erzeugt die Verwaltungseinrichtung 4 aus den gespeicherten Abonnements Datenanfragen ("prepare KB queries") für die einzelnen Wissensbasen 3. Diese Datenanfragen werden (potentiell parallel) über die Schnittstelle 3a an die entsprechenden Wissensbasen 3 gestellt. Für jede Anfrage kann es entweder keine ("[no data or nothing changed]") oder aber neue Daten ("[new data]") geben. Im ersten Fall erfolgt keine Benachrichtigung. Im zweiten Fall werden aus den Resultaten der Datenbankabfragen Benachrichtigungen erzeugt und an die entsprechenden Abonnenten 5 verschickt ("send notification").

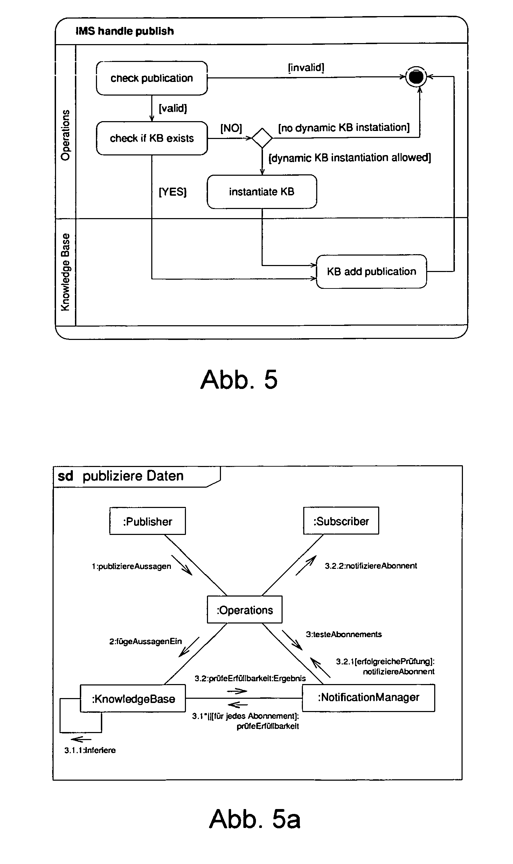

In Abb. 5 und 5a ist der Ablauf einer Datenpublikation veranschaulicht. Eine über die Schnittstelle 2b (Publish) erhaltene Publikation wird innerhalb der Überprüfungseinrichtung 2 zuerst auf ihre Gültigkeit überprüft ("check publication"). Dies beinhaltet unter anderem die Überprüfung der Syntax der Publikation und setzt die Kenntnis der referenzierten Datenmodelle 10, z.B. Ontologie voraus. Ist die Publikation ungültig ("[invalid]"), wird sie verworfen und die weitere Bearbeitung abgebrochen. Im Falle einer formal gültigen Publikation ("[valid]") wird als nächstes geprüft, ob für die referenzierten Datenmodelle eine entsprechende Wissensbasis 3 existiert. Sollte eine solche Wissensbasis 3 nicht existieren ("[NO]") und in einer Ausführungsform der Erfindung keine dynamische Wissensbasis Instantiierung erlaubt bzw. möglich sein ("[no dynamic KB instantiation]"), so wird die Publikation ebenfalls verworfen. Falls die Erzeugung der Wissensbasis 3 möglich bzw. erlaubt ist, wird diese erzeugt ("instantiate KB"). Für den Fall, dass die Wissensbasis 3 erzeugt werden konnte bzw. bereits existierte ("[YES]"), wird die Publikation zur weiteren Bearbeitung über die Schnittstelle 3a an die entsprechenden Wissensbasis 3 weitergereicht und dort bearbeitet ("KB add publication").

Entsprechend dem Kommunikationsdiagramm in Abb. 5a werden folgende Schritte durchgeführt:
1. Der Herausgeber :Publisher schickt eine Publikation an die Komponente :Interface ("1:publiziereAussagen").
2. Nach einer syntaktischen Überprüfung der Publikation wird diese an die Komponente :KnowiedgeBase (Wissensbasis) weitergeleitet ("2:fügeAussagenEin").
3. Anschließend wird eine Überprüfung aller Abonnements angestoßen ("3:testeAbonnements").
3.1. Der :SubscriptionManager stößt daraufhin eine Prüfung auf Erfüllbarkeit aller gespeicherten Abonnements in der :KnowledgeBase an ("3.1*∥[für jedes Abonnement]:prüfeErfüllbarkeit").
3.1.1. Innerhalb der :KnowledgeBase wird über die vorhandenen Instanzen und das Datenmodell geschlussfolgert ("3.1.1:inferiere").
3.2. Für jede angestoßene Prüfung werden die Schlussfolgerungen an den :SubscriptionManager zurückgeliefert ("3.2:prüfeErfüllbarkeit:Ergebnis").
3.2.1. Sollte das Abonnement erfüllt sein, wird das Resultat an das :Interface zurückgeliefert ("3.2.1 [erfolgreichePrüfung]notifiziereAbonnent").
3.2.2. Das :Interface leitet das Resultat an den Abonnement :Subscriber weiter ("3.2.2:notifiziereAbonnent").

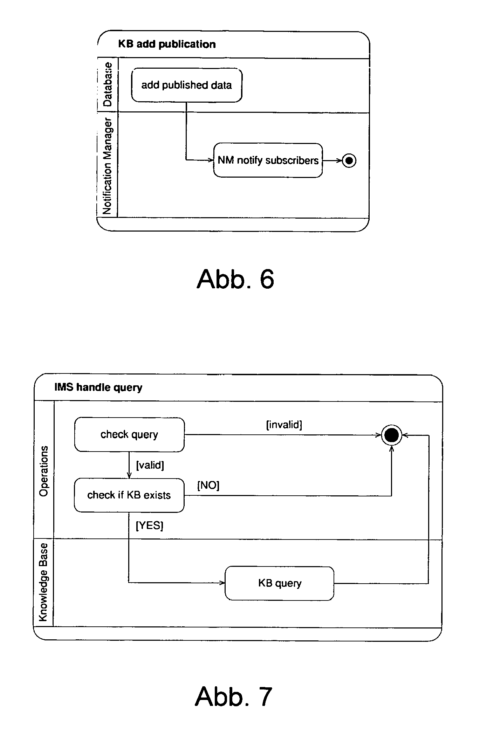

Die Bearbeitung einer Datenpublikation in einer Wissensbasis 3 ist in Abb. 6 dargestellt. Zuerst wird die Publikation in der der Wissensbasis 3 zugeordneten Database 8 gespeichert. Danach wird die Verwaltungseinrichtung 4 über die Schnittstelle 4a benachrichtigt ("NM notify subscribers"). Dieser erhält dadurch die Möglichkeit zu prüfen, ob es Interessenten für die neu hinzugekommen Daten gibt.

Wie in Abb. 7 dargestellt wird eine über die Schnittstelle 2c erhaltene Datenabfrage innerhalb der Überprüfungseinrichtung 2 zuerst auf ihre Gültigkeit überprüft ("check query"). Dies beinhaltet unter anderem die Überprüfung der Syntax der Datenabfrage und der Kenntnis der referenzierten Datenmodelle, z.B. Ontologie(n). Ist die Datenabfrage ungültig ("[invalid]") wird sie verworfen und die weitere Bearbeitung abgebrochen. Im Falle einer formal gültigen Datenabfrage ("[valid]") wird als nächstes geprüft, ob für die referenzierte Ontologie eine entsprechende Wissensbasis 3 existiert. Sollte für die Ontologien noch keine Wissensbasis 3 existieren ("[NO]"), so wird die Datenabfrage verworfen und ein leeres Resultat zurückgeliefert. Für den Fall, dass eine entsprechende Wissensbasis 3 bereits existiert ("[YES]"), wird die Datenabfrage zur weiteren Bearbeitung über die Schnittstelle 3a an die entsprechende Wissensbasis 3 weitergereicht und dort bearbeitet ("KB query").

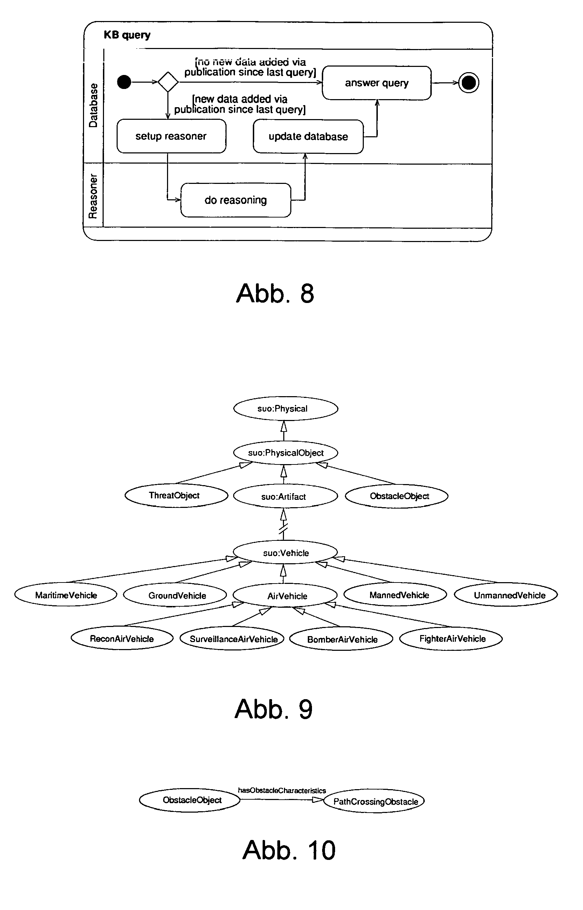

Die Bearbeitung einer Datenabfrage in einer Wissensbasis 3 ist in Abb. 8 dargestellt. Zuerst wird in der der Wissensbasis 3 zugeordneten Datenbank 8 geprüft ob dies die erste Anfrage ist, oder ob seit der letzten Anfrage neue Daten über die Schnittstelle 3a zur Datenbank hinzugefügt wurden. Sollte das der Fall sein ("[new data added via publication since last query]"), wird die Schlussfolgerungslogik initialisiert ("setup reasoner") und der Schlussfolgerungsprozess über die Schnittstelle 9a gestartet ("do reasoning"). Nach Abschluss dieses Prozesses werden die geschlussfolgerten Daten zur Datenbank 8 hinzugefügt ("update database"). Nach erfolgreicher Aktualisierung der Datenbank 8 oder für den Fall das keine neuen Daten in der Datenbank 8 abgelegt wurden ("[no new data added via publication since last query]"), erfolgt die Datenabfrage an die Datenbank 8. Das Resultat der Abfrage wird über die Schnittstelle 3a zurückgeliefert.

Abschließend wird anhand eines Fallbeispiels wird das Prinzip der Konzeptentkopplung unter Verwendung des Informationsmanagementsystems IMS erläutert. Ein Flugzeug soll bei der Ausführung einer Mission zuvor unbekannte Hindernisse detektieren und diesen ausweichen können. Am Fallbeispiel sind mehrere Herausgeber und Abonnenten beteiligt, die Informationen über Objekte aus der realen Umgebung unter Nutzung des Informationsmanagementsystems austauschen. Die Missionssoftware kann mit Hilfe von Sensoren Objekte aus der Umgebung erkennen und feststellen, ob diese den eigenen Weg kreuzen. Diese Feststellung wird anhand eines Merkmales, zusätzlich zu den inhärenten Eigenschaften des Objekts, annotiert. Auf Objekte mit diesem Merkmal wird gesondert reagiert. Da der Schwerpunkt auf der Zuordnung von Publikationen zu Abonnements liegt, wird im Fallbeispiel auf die Beschreibung der Implementierung der konkreten Funktionalität verzichtet.

Abb. 9 stellt einen Ausschnitt des zugrunde liegenden Schemas in Form einer Web Ontology Language - Description Logic (OWL-DL) Ontologie dar. Wesentliche Konzepte in diesem Schema sind "PhysicalObject" ("Physisches Objekt"), "Vehicle" ("Fahrzeug") und "ObstacieObject" ("Hindernis Objekt"). Hierbei ist anzumerken, dass die beiden letztgenannten Konzepte zwar von "PhysicalObject" abgeleitet sind, aber nicht in einer direkten hierarchischen Beziehung zueinander stehen.

Während das Konzept "Vehicle" sowie dessen hierarchische Nachkommen die objektiven Eigenschaften von Fahrzeugen jeglicher Art beschreiben, ist "ObstacleObject" ein Konzept, welches eine Eigenschaft vertritt, die nicht generell auf alle Fahrzeuge zutrifft. "ObstacleObject" ist definiert durch eine "hasObstacleCharacteristics" Beziehung zu "PathCrossingObstacle" (vgl. Abb. 10).

Wesentliche Aussagen des Schemas für dieses Beispiel sind:
- Instanzen des Konzepts "Vehicle" sind auch Instanzen des "PhysicalObject" (Generalisierung).
- Hat eine Instanz des Konzepts "Vehicle" die "hasObstacleCharacteristics" Eigenschaft zu "PathCrossingObstacle", so erfüllt sie auch das Konzept "ObstacleObject". Diese Instanz des Konzepts "Vehicle" ist somit auch eine Instanz des Konzepts von "ObstacleObject".

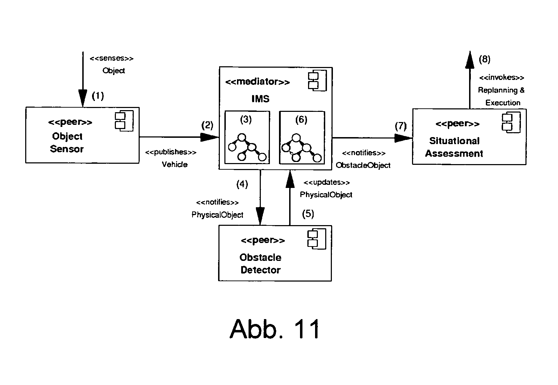

Abb. 11 zeigt die beteiligten Komponenten des Fallbeispiels. An zentraler Stelle fungiert das Informationsmanagementsystem IMS als Mediator des P/S Systems. Weiterhin sind ein Herausgeber und zwei Abonnenten beteiligt, nämlich:
- ein Object Sensor: Diese Komponente tritt als Herausgeber auf und stellt damit dem Informationsmanagementsystems IMS Instanzen des Konzepts "Vehicle" zur Verfügung, falls Fahrzeuge durch die Sensorfunktionalität der Komponente in der Umgebung des Gesamtsystems wahrgenommen werden.
- Obstacle Detector: Diese Komponente hält ein Abonnement auf Instanzen des Konzepts "PhysicalObject". Bei einer Benachrichtigung bezüglich einer solchen Instanz, prüft die Komponente, ob eine Wegüberschneidung zwischen dem eigenen Fahrzeug und der Instanz eines "PhysicalObject" vorliegt. Ist dies der Fall, wird dieser Instanz die Aussage "hasObstacleCharacteristics PathCrossingObstacle" hinzugefügt, indem diese Aussage an das IMS publiziert wird.
- Situational Assessment: Diese Komponente hält ein Abonnement auf Instanzen des Konzepts "ObstacleObject", welches definiert ist als Instanz von "PhysicalObject", dass in "hasObstacleCharacteristics" Beziehung steht zu "PathCrossingObstacle". Bei einer Benachrichtigung über derartige Instanzen trifft diese Komponente geeignete Mittel zur Kollisionsvermeidung.

Die folgende Tabelle fasst die Publikationen und Abonnements nochmals zusammen:

| Komponente | Publikationen | | Abonnements | |
|---|---|---|---|---|
| Object Sensor | "Vehicle" | P1 | n.a. | n.a |
| Obstacle Detector | "PhysicalObject" erweitert um Aussagen zu "hasObstacle-Characteristics PathCrossi-gObstacle" | P2 | "PhysicalObject" | A1 |
| Situational Assessment | n.a. | n.a | "ObstacleObject" | A2 |

Nachfolgend werden in textueller Form Abläufe für die beiden Fälle "Es liegt kein Hindernis vor" und "Es liegt ein Hindernis vor" beschrieben:

### a) Hindernis liegt nicht vor

Es wird angenommen, dass der ObjectSensor ein Fahrzeug in seiner Umgebung wahrnimmt, welches den eigenen Weg nicht überschneidet.
1. Object Sensor publiziert (P1) Instanz "v1" des Konzepts "Vehicle".
2. Das IMS ordnet die Publikation dem Abonnement A1 zu, da "PhysicalObject" eine Generalisierung von "Vehicle" ist.
3. Daraufhin benachrichtigt das IMS den Obstacle Detector über die Existenz von "v1", jedoch als Instanz des Konzepts "PhysicalObject".
4. Obstacle Object stellt fest, dass das Fahrzeug "v1" den geplanten eigenen Weg nicht kreuzt und fügt dieser instanz nicht die Eigenschaft "hasObstacleCharacteristics PathCrossigObstacle " hinzu. Folglich findet auch keine Publikation an das IMS statt.

In Konsequenz obiger Sequenz erfolgt keine Benachrichtigung von Situational Assessment auf Basis des Abonnements A2, da eine Zuordnung von "v1" zu dem Konzept "ObstacleObject" nicht hergestellt werden kann.

### b) Hindernis liegt vor

Es wird angenommen, dass der ObjectSensor ein Fahrzeug in seiner Umgebung wahrnimmt, welches den eigenen Weg überschneidet.
1. Object Sensor publiziert (P1) Instanz "v2" des Konzepts "Vehicle".
2. Das IMS ordnet die Publikation dem Abonnement A1 zu, da "PhysicalObject" eine Generalisierung von "Vehicle" ist.
3. Daraufhin benachrichtigt das IMS den Obstacle Detector über die Existenz von "v2", jedoch als Instanz des Konzepts "PhysicalObject".
4. Obstacle Object stellt fest, dass das Fahrzeug "v2" den geplanten eigenen Weg kreuzen wird und fügt dieser Instanz die Eigenschaft " hasObstacleCharacteristics PathCrossingObstacle" hinzu. Diese neue Erkenntnis wird dem IMS durch die Publikation P2 bekanntgemacht.
5. Das IMS ordnet die neue Publikation betreffend "v2" nun auch dem Abonnement A2 zu, da "v2" sowohl vom generalisierten Typ "PhysicalObject" ist, als auch Definition von "ObstacleObject" erfüllt.
6. Daraufhin benachrichtigt das IMS die Komponente Situational Assessment über die Existenz von "v2", jedoch als Instanz des Konzepts "ObstacleObject".

In diesem Beispiel erfolgen die Zuordnungen innerhalb des IMS auf Grundlage von Vererbungshierarchien (vgl. 3.) und orthogonalen, rein logischen Beziehungen (vgl. 5.).

Durch das Prinzip der Konzeptentkopplung ist es in diesem Fallbeispiel nicht notwendig, das die Komponente Situational Assessment Kenntnis weder von allen Konzepten besitzt deren Instanzen zu Hindernissen werden können, noch muss sie wissen wie es zur Zuordnung von Instanzen zu "ObstacleObject" kommt.

## Patentansprüche

1. Publikations-Abonnementsystem umfassend
einen oder mehrere Herausgeber (6) zur Erzeugung von Nachrichten,
einen oder mehrere Abonnenten (5) zur Registrierung eines oder mehrerer Abonnements und zum Empfangen von Nachrichten aufgrund dieser Abonnements,
eine oder mehrere Einrichtungen zur Erzeugung von Datenanfragen,
eine Verwaltungseinrichtung (4) zur Verwaltung der Anfrage des Abonnenten, eine Überprüfungseinrichtung (2) zur Überprüfung der Nachricht des Herausgebers (6) bzw. der Anfrage des Abonnenten (5) auf Gültigkeit, wobei die Nachricht bzw. die Anfrage bezüglich Syntax überprüft wird und mögliche Relationen zwischen den Daten in der Nachricht bzw. der Anfrage unter Berücksichtigung vorgegebener Datenmodelle bestimmt werden,
eine oder mehrere dynamisch oder statisch instanziierbare Wissensbasen (3), jeweils umfassend eine Datenbank (8) zur Speicherung der Nachrichten und eine Einrichtung (9) zur Schlussfolgerung über die Inhalte der Datenbank (8) unter Berücksichtigung eines der jeweiligen Wissensbasis (3) zugeordneten Datenmodells (10).

2. Publikations-Abonnementsystem gemäß Anspruch 1,
**dadurch gekennzeichnet, dass**
eine Schnittstelle (3a) vorhanden ist über welche jede Datenbank (8) einer jeweiligen Wissensbasis (3) mit der Überprüfungseinrichtung (2) und mit der Verwaltungseinrichtung (4) verbunden ist.

3. Publikations-Abonnementsystem gemäß einem der vorangehenden Ansprüche,
**dadurch gekennzeichnet, dass**
eine Schnittstelle (5a) vorhanden ist über welche die Verwaltungseinrichtung (4) eine Nachricht basierend auf einer Abonnementsregel an einen Abonnenten (5) weiterleitet.

4. Publikations-Abonnementsystem gemäß einem der vorangehenden Ansprüche,
**dadurch gekennzeichnet, dass**
eine Schnittstelle (2a) vorhanden ist über welche der Abonnent (5) die Registrierung von Abonnements an die Überprüfungseinrichtung (2) weiterleitet.

5. Publikations-Abonnementsystem gemäß einem der vorangehenden Ansprüche,
**dadurch gekennzeichnet, dass**
eine Schnittstelle (4b) vorhanden ist über welche die Überprüfungseinrichtung (2) die Abonnements eines Abonnenten (5) an die Verwaltungseinrichtung (4) weiterleitet.

6. Publikations-Abonnementsystem gemäß einem der vorangehenden Ansprüche,
**dadurch gekennzeichnet, dass**
eine Schnittstelle (4a) vorhanden ist, über welche die Verwaltungseinrichtung (4) über Änderungen des Inhalts der Datenbank (8) der Wissensbasis (3) informiert wird.

7. Publikations-Abonnementsystem gemäß einem der vorangehenden Ansprüche,
**dadurch gekennzeichnet, dass**
eine Schnittstelle (2b) vorhanden ist, über welche der Herausgeber (6) die Publikation an die Überprüfungseinrichtung (2) weiterleitet.

8. Publikations-Abonnementsystem gemäß einem der vorangehenden Ansprüche,
**dadurch gekennzeichnet, dass**
eine Schnittstelle (2c) vorhanden ist, über welche an die Überprüfungseinrichtung (2) eine Datenanfrage gestellt wird.

9. Verfahren zum Registrieren eines Abonnements in einem Publikations-Abonnementsystem gemäß einem der vorangehenden Ansprüche, wobei das Verfahren die Schritte aufweist:
Empfangen eines Abonnements von einem Abonnenten,
Überprüfen des Abonnements auf Gültigkeit bezüglich Syntax,
Überprüfen des Abonnements auf Gültigkeit bezüglich der Relationen zwischen den Konzepten des Abonnements und des vorgegebenen Datenmodells;
bei Gültigkeit des Abonnements: Überprüfung, ob eine Wissensbasis (3) mit dem zuvor referenzierten Datenmodell bereits instanziiert ist,
Erzeugung einer entsprechenden Wissensbasis (3), falls die vorherige Überprüfung ergeben hat, dass keine derartige Wissensbasis (3) instanziiert ist,
Überprüfung, ob für das zu registrierende Abonnement in der Verwaltungseinrichtung (4) bereits ein Duplikat vorhanden ist,
falls es sich bei dem zu registrierenden Abonnement um ein neues handelt, wird es in der Verwaltungseinheit (4) gespeichert und anschließend auf Erfüllbarkeit überprüft. Hierbei wird eine Datenanfrage an die Wissenbasis (3) gestellt, welche eine Schlußfolgerung über die Inhalte der Datenbank (8) unter Berücksichtigung des Datenmodells (1) bewirkt,
die Ergebnisse der Schlussfolgerung werden in der Datenbank (8) gespeichert;
falls mindestens ein gültiges Ergebnis der Datenanfrage vorliegt, erfolgt eine Benachrichtigung des Abonnenten.

10. Verfahren zum Registrieren und Versenden einer Publikation in einem Publikations-Abonnementsystem gemäß einem der vorangehenden Ansprüche, wobei das Verfahren die Schritte aufweist:
Empfangen einer Publikation von einem Herausgeber,
Überprüfen der Publikation auf Gültigkeit bezüglich Syntax,
Überprüfen der Publikation auf Gültigkeit bezüglich der Relationen zwischen den Konzepten der Publikation und des vorgegebenen Datenmodells,
bei Gültigkeit der Publikation: Überprüfung, ob eine Wissensbasis (3) mit den zuvor referenzierten Datenmodell bereits instanziiert ist,
Erzeugung einer entsprechenden Wissensbasis (3), falls die vorherige Überprüfung ergeben hat, dass keine derartige Wissensbasis (3) instanziiert ist, Speichern der Publikation in der der entsprechenden Wissensbasis (3) zugeordneten Datenbank (8),
Benachrichtigung der Verwaltungseinrichtung (4) über erfolgte Änderungen in der Datenbank (8) der entsprechenden Wissenbasis (3),
für jedes registrierte Abonnement in der Verwaltungseinrichtung (4) erfolgt die Überprüfung auf Erfüllbarkeit. Hierbei wird jeweils eine Datenanfrage an die Wissenbasis (3) gestellt, welche eine Schlußfolgerung über die Inhalte der Datenbank (8) unter Berücksichtigung des Datenmodells (1) bewirkt,
die Ergebnisse der Schlussfolgerung werden in der Datenbank (8) gespeichert; falls mindestens ein gültiges Ergebnis einer Datenanfrage vorliegt, erfolgt eine Benachrichtigung des entsprechenden Abonnenten.

11. Verfahren zum Realisierung einer Datenanfrage in einem Publikations-Abonnementsystem gemäß Anspruch 8, wobei das Verfahren die Schritte aufweist:
Empfangen einer Datenanfrage über die Schnittstelle (2c),
Weiterleiten der Datenanfrage an Überprüfungseinrichtung (2), Überprüfen der Datenanfrage auf Gültigkeit bezüglich Syntax,
Überprüfen der Datenanfrage auf Gültigkeit bezüglich der Relationen zwischen den Konzepten der Datenanfrage und des vorgegebenen Datenmodells,
bei Gültigkeit der Datenanfrage: Überprüfung, ob eine Wissensbasis (3) mit dem zuvor referenzierten Datenmodell instanziiert ist,
falls eine Wissenbasis (3) instanziiert ist, erfolgt ein Test auf Erfüllbarkeit der Datenanfrage;
hierbei wird eine Datenanfrage an die Wissenbasis (3) gestellt, welche eine Schlußfolgerung über die Inhalte der Datenbank (8) unter Berücksichtigung des Datenmodells (1) bewirkt,
die Ergebnisse der Schlussfolgerung werden in der Datenbank (8) gespeichert, falls mindestens ein gültiges Ergebnis der Datenanfrage vorliegt, erfolgt eine Benachrichtigung der Einrichtung (7).
